Europäisches Patentamt

European Patent Office

Office européen des brevets

(19)

(11) Veröffentlichungsnummer: **0 098 418**
**B1**

(12) **EUROPÄISCHE PATENTSCHRIFT**

(45) Veröffentlichungstag der Patentschrift:
**17.09.86**

(51) Int. Cl.⁴: **F 16 K 1/44**

(21) Anmeldenummer: **83105820.1**

(22) Anmeldetag: **14.06.83**

(54) **Doppeltellerventil.**

(30) Priorität: **02.07.82 DE 3224852**

(43) Veröffentlichungstag der Anmeldung:
**18.01.84 Patentblatt 84/3**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**DE - A - 1 675 575**
**DE - A - 2 027 792**
**DE - A - 2 460 182**
**DE - A - 2 623 039**
**DE - A - 3 005 329**
**DE - A - 3 017 084**
**DE - B - 2 623 301**
**GB - A - 2 091 852**

(73) Patentinhaber: **Albert Handtmann Armaturenfabrik GmbH & Co. KG, Birkenallee 25-29, D-7950 Biberach 1 (DE)**

(72) Erfinder: **Balsys, Manfred, Buchenweg 7, D-7950 Biberach 1 (DE)**
Erfinder: **Kling, Dieter, Kutzbergerweg 1, D-7950 Biberach 1 (DE)**
Erfinder: **Maier, Hans, Föhrenweg 5, D-7958 Laupheim 1 (DE)**
Erfinder: **Miller, Franz, Rammingerstrasse 26, D-7950 Biberach (DE)**
Erfinder: **Schmid, Walter, Häusern 26, D-7951 Ummendorf (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

# Beschreibung

Die Erfindung betrifft ein Doppelsitzventil mit zwei voneinander unabhängig bewegbaren Ventiltellern, die mit einem im Ventilgehäuse zwischen einem Zuflussrohr und einem Abflussrohr für das Produkt angeordneten Ventilsitz zusammenwirken und sowohl in der Offenstellung als auch in der Schliessstellung einen Leckkontrollraum zwischen sich einschliessen, der bei geöffnetem Ventil infolge einer Verringerung des Abstandes zwischen beiden Ventiltellern abgedichtet ist, in dem einer der Ventilteller beim Öffnen des Ventils vorläuft und nach einem bestimmten Hub am anderen Ventilteller zur Anlage kommt und beide Ventilteller dann durch eine Federkraft mit Abdichtungen gegeneinandergepresst sind, wobei der vorlaufende Ventilteller an einer hohlen Betätigungsstange befestigt ist, durch welche dem Leckkontrollraum Reinigungsflüssigkeit über radial in diesen Raum mündende Spritzbohrungen zuführbar ist, die durch ein mit dem Leckkontrollraum in Verbindung stehendes Ableitungsrohr nach aussen abführbar ist und wobei der nachlaufende Ventilteller mit einem Betätigungsrohr verbunden ist, durch welches sich die Betätigungsstange des vorauslaufenden Ventiltellers hindurch erstreckt.

Aus der DE-A-26 23 039 ist ein Doppeltellerventil der eingangs genannten Art bekannt, bei welchem der Ventilsitz kegelförmig ausgebildet ist. Das Betätigungsrohr des nachlaufenden Ventiltellers erstreckt sich durch die Betätigungsstange des vorauslaufenden Ventiltellers hindurch, so dass das Ventil von einer Seite her zu betätigen ist.

Zum Reinigen des zwischen den beiden Ventiltellern gebildeten Leckageraumes kann Reinigungsflüssigkeit über Öffnungen in den Leckageraum eingefüllt werden. Dieser Leckagekontrollraum dient in bekannter Weise dazu, die bei geschlossenem Ventil in denselben infolge von Undichtigkeiten des Ventilsitzes eindringende Produktflüssigkeit durch ein Ableitungsrohr nach aussen abzuführen und somit einen undichten Ventilsitz anzuzeigen.

Dieses bekannte Doppeltellerventil hat jedoch mehrere Nachteile. Ein wesentlicher Nachteil liegt darin, dass es nicht möglich ist, die am stärksten verschmutzten Teile des Ventils, nämlich die Sitzflächen des Ventilsitzes, zu reinigen. Eine solche Reinigung kann nämlich nur bei geschlossenem Ventil erfolgen, wobei notwendigerweise bei der bekannten Bauart die Sitzflächen durch die Ventilteller abgedeckt und somit für die Reinigungsflüssigkeit nicht erreichbar ist.

Die sich mangels Reinigungsmöglichkeiten an den Sitzflächen ansammelnden Rückstände beschleunigen die Verschlechterung der Abdichtung zwischen Ventil und Gehäuse und bewirken somit ein kontinuierliches und sich fortlaufend erhöhendes Austreten von Produktflüssigkeit über den Leckkontrollraum nach aussen. Die Leckageverluste sind dabei ganz erheblich.

Ein ähnliches Ventil, für welches ebenfalls die vorstehend beschriebenen Nachteile gelten, ist aus der DE-B-26 23 301 bekannt.

Weiterhin ist aus der deutschen Patentschrift 25 23 202 ein Doppeltellerventil bekannt, welches infolge der schieberartigen Ausbildung vorzugsweise des oberen Ventiltellers, d.h. durch Ausbildung eines zylindrischen Ventilsitzes, mit verringerter Schaltleckage arbeitet. Es handelt sich hierbei jedoch um ein gattungsfremdes Doppeltellerventil, da eine Reinigung des Ventilsitzes und des Ventils in zusammengebautem Zustand nicht vorgesehen ist. Darüber hinaus wäre auch bei Zufuhr von Reinigungsflüssigkeit eine Reinigung der Sitzflächen beider Ventilteller nicht möglich, da dieselben bei geschlossenem Ventil von den Ventiltellern abgedeckt sind und nur durch den nach unten erfolgenden Öffnungsvorgang von dieser Abdeckung frei gemacht werden können. Jedoch wird während dieses Öffnungsvorgangs der Leckkontrollraum durch die vorlaufende Bewegung des oberen Ventiltellers bis zum Auftreffen auf den unteren Ventilteller geschlossen, so dass die Sitzflächen nicht von der Reinigungsflüssigkeit aus dem Leckkontrollraum erreicht werden können.

Es ist Aufgabe der Erfindung, ein gattungsgemässes Doppeltellerventil so weiterzubilden, dass eine effektive wirkungsvolle Reinigung der Sitzflächen des Ventils möglich ist, so dass das Ventil auch über einen längeren Benutzungszeitraum ohne Leckageverluste der Produktflüssigkeit arbeiten kann.

Dies wird dadurch erreicht, dass bei einem Doppeltellerventil der eingangs genannten Art die Betätigungsstange und das Betätigungsrohr eine gegenseitige Führung bilden, dass der Ventilsitz der beiden Ventilteller als zylindrischer Ventilsitz ausgebildet ist, dass die Ventilteller derart gegenläufig beweglich sind, dass sie ihre der Schliessstellung entsprechende Sitzfläche freigeben, ohne dabei den Ventilsitz zu verlassen.

Die gegenseitige Führung von Betätigungsstange und Betätigungsrohr ermöglicht in einfacher Weise eine verbesserte Führung der Ventilteller sowohl innerhalb des Ventilsitzes als auch in der kritischen Phase des Eindringens der Ventilteller während der Schliessbewegung in den zylindrischen Ventilsitz. Dadurch wird die Funktionsfähigkeit der sicheren Abdichtung auch über einen längeren Zeitraum mit entsprechend hoher Schalthäufigkeit gesichert.

Durch die Ausbildung eines zylindrischen Ventilsitzes für beide Ventilteller wird erreicht, dass deren Sitzflächen ohne Gefahr des Eindringens von Reinigungsflüssigkeit in die Produktleitungen, d.h. beliebig oft, vom Leckkontrollraum aus gereinigt werden können. Zu diesem Zweck werden vor Beginn der Reinigung die Ventilteller um einen solchen Betrag gegenläufig bewegt, dass sie ihre der Schliessstellung entsprechenden Sitzflächen freigeben, ohne dabei den Ventilsitz zu verlassen. Für die Steuerung dieser Bewegung ist die vorerwähnte Anordnung der Betätigungsstange innerhalb des Betätigungsrohres vorteilhaft. Der zylindrische Ventilsitz ermöglicht infolge der beliebig oft durchführbaren Reinigung die Entfernung auch geringster Ansammlungen von Verunreinigungen am Ventilsitz, wodurch die Lebensdauer der Abdichtung weiterhin erhöht wird. Der zylindrische Ventilsitz ist gleichfalls eine Voraussetzung zum Ausschalten der Schaltleckage.

Die Ausbildung der Betätigungsstange im Bereich des Leckkontrollraumes mit radial in diesen Raum mündende Spritzbohrungen für das Reinigungsmittel ermöglicht die Reinigung insbesondere der Randbereiche der Ventilteller sowie des Ventilsitzes mit einem im wesentlichen auf diese Bereiche gerichteten Flüssigkeitsstrahl. Dies bedeutet, dass die am stärksten verschmutzten Teile des Ventils am intensivsten gereinigt werden. Die Spritzbohrungen richten dabei den Strahl mit einer hohen Geschwindigkeit auf den Ventilsitz. Für die radial inneren Teile der Ventilteller, die im allgemeinen weniger verschmutzt sind, reicht die dabei gleichzeitig erfolgende Spülung zur Reinigung aus.

Es hat sich gezeigt, dass die Kombination der beschriebenen Merkmale die Abdichtung zwischen den Ventiltellern und dem Ventilsitz für einen überraschend langen Benutzungszeitraum auf dem ursprünglichen Niveau hält.

Zur einfachen und exakten Steuerung der Bewegung der Ventilteller zwecks Reinigung ihrer Sitzflächen ist es vorteilhaft, dass jeder Ventilteller im zylindrischen Ventilsitz axial gegen einen Anschlag verschiebbar ist.

Zur sicheren Abdichtung über einen längeren Zeitraum wird das Ventilgehäuse vorzugsweise derart einstückig ausgebildet, dass der zylindrische Ventilsitz fugenlos gestaltet ist. In der Praxis hat sich gezeigt, dass Rückstände sich besonders leicht an den Dichtungen, insbesondere in deren Nuten, ansammeln. Diese Rückstände führen zu mikrobiologischen Störungen, wie z.B. dadurch, dass beim Brauen von Bier die dem Tank zugeführte Hefe sich an Dichtungen ablagert und nach Beendigung des Brauvorganges beim Abfüllen des Biers in Flaschen mit abgefüllt wird und eine Fortsetzung der Gärung in der Flasche bewirkt. Durch Reduzierung der Anzahl der Dichtungen wird also die biologische Sicherheit erhöht.

Gemäss einer Weiterbildung der Erfindung besteht die Dichtung jedes Ventiltellers aus einem den äusseren Umfang des Ventiltellers überragenden Dichtring und aus zwei sich beiderseits an den Dichtring anschliessenden Halteringen, die der Oberseite bzw. der Unterseite des Ventiltellers anliegen, bis in den Bereich der Verbindungen der Ventilteller mit der Betätigungsstange bzw. dem Betätigungsrohr reichen und diese Verbindungen abdichten. Die Befestigung der Dichtringe erfolgt hierbei vorwiegend durch die keiner mechanischen Belastung ausgesetzten Halteringe, so dass die Lebensdauer der Dichtringe erhöht wird. Die nach verhältnismässig kurzer Zeit auftretende Zerstörung bzw. Abscherung der in herkömmlicher Weise an den Dichtflächen der Ventilteller befestigten Dichtringe, z.B. in einer umlaufenden Nut, wird hierbei vermieden. Im Zusammenhang mit dieser Ausbildung wird der Dichtring vorzugsweise mit den Halteringen ein- oder mehrteilig aus Gummi oder gummiähnlichem Werkstoff hergestellt und auf den Ventilteller aufvulkanisiert. Diese Massnahmen erhöhen die biologische Sicherheit.

Eine weitere Verbesserung der erfindungsgemässen Dichtring-Ausführung wird dadurch erreicht, dass der Dichtring als Ringwulst ausgebildet ist, der die jeweils dem anderen Ventilteller zugewandte Seite des einen Ventiltellers überragt. Es entsteht sozusagen eine Lippe, die sich elastisch dem Ventilsitz anlegt und es gleichzeitig ermöglicht, auch bei fortgeschrittener Abnutzung des Dichtringes durch Verringerung des Abstandes zwischen beiden Ventiltellern ein Teil dieser Lippe in den Spalt zwischen Ventilteller und Ventilsitz zu drücken. Durch diese Massnahme wird die Abdichtung wieder verbessert. Die Verringerung des Abstandes zwischen den Ventiltellern bewirkt auch gleichzeitig eine bessere Abdichtung des Leckkontrollraumes gegenüber den Produktleitungen, insbesondere dann, wenn beide Lippen aufeinandergepresst sind. Bekannte Ventildichtungen weisen einen im Abstand vom radial äussersten Ventiltellerrand zwischen den Ventiltellern angebrachten Abdichtring auf. Ausserdem ist ein Abdichtungsring zwischen jedem Ventilteller und dem Ventilsitz vorgesehen, welche auch bei geöffnetem Ventil. d.h. bei zwecks Abdichtung des Leckkontrollraums dicht aneinanderliegenden Ventiltellern einen gegenseitigen Abstand in axialer Richtung des Ventils aufweisen. Der von diesen Abdichtungsringen, dem Abdichtring, den Ventiltellern und dem Ventilsitz eingeschlossene Hohlraum wird bei jedem Öffnen des Ventils mit Produktflüssigkeit gefüllt, welche bei geschlossenem Ventil, d.h. bei geöffnetem Leckkontrollraum über denselben nach aussen abgeführt wird. Durch die erfindungsgemässe Ausbildung der Dichtringe in Form eines Ringwulstes mit einer Lippe ist dieser Hohlraum bei geöffneten Ventil auf Null reduziert, so dass keine Produktflüssigkeit beim Schliessen des Ventils eingefangen und nach aussen abgeführt werden kann. Mit anderen Worten, die Schaltleckage ist ausgeschaltet, da die Ventilteller noch während sie sich im zylindrischen Ventilsitz befinden, bei Betätigung dicht schliessend zusammengeführt werden und dann erst den Sitz verlassen. Durch die Verwendung einer derartig ausgebildeten Dichtung wird die biologische Sicherheit weiter erhöht.

Zur weiteren Verbesserung der Führung der Ventilteller wird vorzugsweise das Ableitungsrohr für die Reinigungsflüssigkeit an den vorlaufenden Ventilteller angeschlossen und mit dem Leckkontrollraum durch Stichbohrungen verbunden. Das Ableitungsrohr stellt sozusagen eine koaxiale Fortsetzung der Betätigungsstange auf der der vorerwähnten Führung zwischen Betätigungsstange und -rohr gegenüberliegenden Seite der Ventilteller dar. Am Durchtritt durch die dem vorlaufenden Ventilteller zugewandten äusseren Rohrwandung ist dieses Ableitungsrohr geführt. Dies bedeutet, dass beide Ventilteller in optimaler Weise beidseitig geführt sind, nämlich durch die Führung zwischen Betätigungsstange und -rohr sowie durch die Führung des Ableitungsrohres in der Rohrwandung.

Gemäss einer Weiterbildung der Erfindung werden das Betätigungsrohr und die Betätigungsstange durch eine mit einem Deckel verschliessbare Öffnung des Zuflussrohres für das Produkt geführt und gegenüber dem Produkt durch einen am Deckel und am nachlaufenden Ventilteller abgedichtet befestigten Faltenbalg hermetisch abgeschlossen und ferner das Ableitungsrohr durch eine mit einem Deckel verschliessbare Öffnung des Abflussrohres für das Produkt geführt und gegenüber dem Produkt durch einen am Deckel und am vorlaufenden Ventilteller abgedichtet befestigten Faltenbalg hermetisch abgeschlossen. Durch diese hermetische Abdichtung der Produktleitungen gegenüber der Aussenluft wird die Gefahr einer bakteriellen Kontamination des Produktes von aussen durch die in den Rohrwandungen ausgebildeten Durchtrittsöffnungen ausgeschaltet. Hierbei kann das Abflussrohr selbstverständlich als Zuflussrohr und das Zufluss- als Abflussrohr benutzt werden.

Die Lebensdauer und die Sicherheit dieser hermetischen Abdichtung wird dadurch gefördert, dass jeder Faltenbalg als Metallbalg ausgebildet und mit den Enden am zugehörigen Deckel sowie am Ventilteller dicht angeschweisst ist.

Durch diese hermetische Abdichtung mittels der Faltenbälge wird die Anzahl der Dichtungen nochmals reduziert und die biologische Sicherheit entsprechend erhöht. Ausserdem ist die Verwendung von aufwendigen Dichtungen am Durchtritt des Betätigungsrohres bzw. des Ableitungsrohres durch die entsprechenden Rohrwandungen überflüssig. Hierbei ist es vorteilhaft, die Abdichtung der die Durchtrittsöffnung verschliessenden Deckel am Gehäuse mittels einer statischen Dichtung vorzunehmen. Gemäss einer Weiterbildung der Erfindung wird der Deckel für die Öffnung des Abflussrohres für das Produkt mittels eines äusseren Spannflansches von innen gegen die statische Dichtung gedrückt. Dies stellt eine wartungs- und reparaturfreundliche Ausbildung dar.

Eine weitere vorteilhafte Ausbildung bezüglich der Reparatur- und Wartungsfreundlichkeit besteht darin, dass der Deckel für die Öffnung des Zuflussrohres mit einem an diesem angeschweissten Ringflansch zusammenwirkt und mittels eines äusseren Trägerflansches von aussen gegen die statische Dichtung gedrückt ist, wobei der Trägerflansch als Träger des gesamten Doppeltellerventils dient.

Eine besonders vorteilhafte Ausbildung der Anschläge, gegen welche die Ventilteller zwecks Steuerung ihrer Bewegung zur Freigabe ihrer Sitzflächen axial verschiebbar sind, ist dadurch gekennzeichnet, dass der Anschlag für den im Ventilsitz bewegbaren, nachlaufenden Ventilteller beispielsweise am Ventilgehäuse in einem der Bewegung entsprechenden Abstand von einem Flansch befestigt ist, welcher unterhalb des als Sitzflansch ausgebildeten oberen Endes des Betätigungsrohres angeordnet und durch eine auf den Sitzflansch wirkende Federkraft gegen einen dem Anschlag gegenüberliegenden ortsfesten Anschlag gepresst ist.

Eine andere bevorzugte Ausbildung der Erfindung besteht darin, dass zur Abdichtung der Ventilteller gegenüber dem Ventilsitz ein Dichtungsring im Ventilsitz angebracht ist, dessen Breite wenigstens dem maximal einstellbaren Abstand beider Ventilteller innerhalb des Ventilsitzes entspricht.

In diesem Zusammenhang ist es günstig, zur gegenseitigen Abdichtung der Ventilteller in ihrer Offenstellung einen Abdichtring in der Peripherie der dem Leckkontrollraum zugewandten Seite des vorlaufenden und/oder des nachlaufenden Ventiltellers vorzusehen.

Im Folgenden wird die Erfindung anhand zweier Ausführungsbeispiele unter Bezugnahme auf die Zeichnung beschrieben.

Es zeigt:

Fig. 1 in schematischer Darstellung einen Axialschnitt durch ein erfindungsgemässes Doppeltellerventil,

Fig. 2 einen vergrösserten Ausschnitt des in Fig. 1 mit A bezeichneten Ventilsitz- und Ventiltellerbereichs bei geschlossenem Ventil in Form eines ersten Ausführungsbeispiels,

Fig. 3 einen vergrösserten Ausschnitt des in Fig. 1 mit B bezeichneten oberen Deckelbereichs,

Fig. 4 einen vergrösserten Ausschnitt des in Fig. 1 mit C bezeichneten unteren Deckelbereichs,

Fig. 5 einen vergrösserten Ausschnitt des in Fig. 2 dargestellten Ventilsitz- und Ventiltellerbereichs in Form eines zweiten Ausführungsbeispiels,

Fig. 6 einen elastisch ausgebildeten Ventilteller im Schnitt in einem ersten Beispiel,

Fig. 7 einen elastisch ausgebildeten Ventilteller im Schnitt in einem zweiten Beispiel mit einer eingespannten Profildichtung,

Fig. 8 einen Ventilteller im Schnitt, der zusammen mit der Dichtung einteilig aus Kunststoff hergestellt ist, und

Fig. 9 eine Drehsicherung für die Faltenbälge.

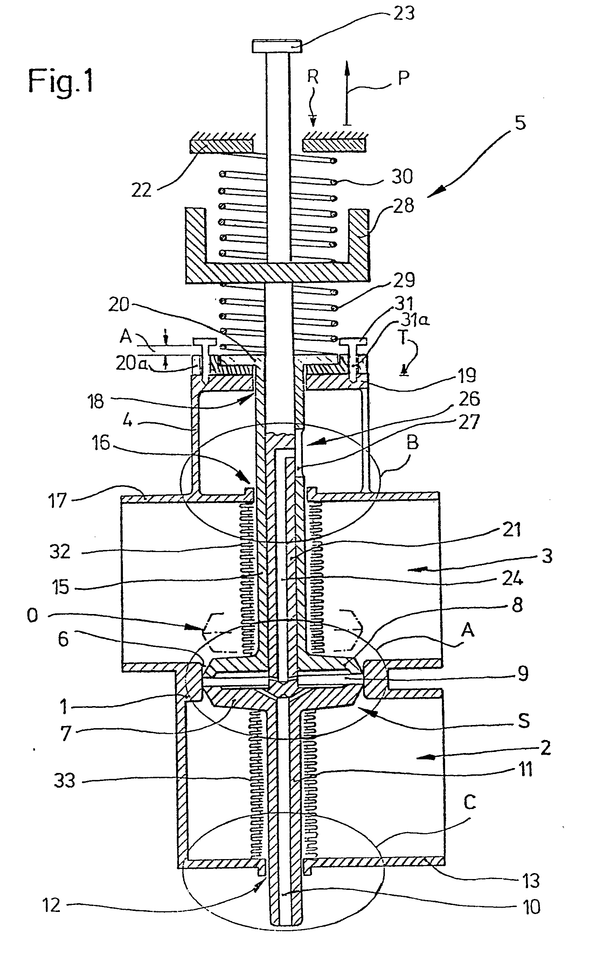

Gemäss Fig. 1 umfasst ein erfindungsgemässes Doppeltellerventil ein Ventilgehäuse 1 mit einer im allgemeinen als Abflussrohr verwendeten unteren Produktleitung 2 und einer im allgemeinen als Zuflussrohr verwendeten oberen Produktleitung 3, ein darüber angeordnetes Zwischengehäuse 4 und eine oberhalb desselben befindlichen Betätigungseinrichtung 5.

Die Mantelfläche einer die beiden Produktleitungen 2 und 3 verbindenden zylindrischen Bohrung stellt einen fugenlosen Ventilsitz 6 für einen vorlaufenden Ventilteller 7 und einen nachlaufenden Ventilteller 8 dar. Die obere und die untere Abschlusskante des Ventilsitzes 6 sind angefasst. Die äussere Umfangsfläche jedes Ventiltellers ist kegelstumpfförmig derart verlaufend ausgebildet, dass die einander zugewandten Flächen der Ventilteller einen grösseren Durchmesser als die einander abgewandten Flächen aufweisen. Die Ventilteller 7, 8 sind auf ihren einander zugewandten Flächen mit jeweils einer symmetrischen Einsenkung versehen, deren Durchmesser derart bemessen ist, dass die nicht eingesenkten Flächen einen verhältnismässig schmalen Ring darstellen. Der von beiden Einsenkungen gebildete Hohlraum wird als Leckkontrollraum 9 bezeichnet.

Der vorlaufende Ventilteller 7 ist mit einem eine durchgehende Ableitungsbohrung 10 aufweisenden zentralen Ableitungsrohr 11 verbunden, welches durch eine untere Durchtrittsöffnung 12 in einer unteren Rohrwandung 13 der unteren Produktleitung 2 nach aussen führt. Die Ableitungsbohrung 10 ist durch schräg nach oben oder waagrecht verlaufende Stichbohrungen 14 mit dem Leckkontrollraum 9 verbunden.

In gleicher Weise ist der nachlaufende Ventilteller 8 mit einem zum Ableitungsrohr 11 koaxialen Betätigungsrohr 15 verbunden, welches durch eine obere Durchtrittsöffnung 16 in einer oberen Rohrwandung 17 der oberen Produktleitung 3 und weiterhin durch eine Öffnung 18 in einer oberen Wandung 19 des Zwischengehäuses 4 hindurchtritt. Das obere Ende des Betätigungsrohres 15 ist als Sitzflansch 20 ausgebildet, der in einer zentralen Vertiefung eines darunter befindlichen Flansches 20a sitzt. Die Wandung 19 ist als ortsfester Anschlag für den Flansch 20a und somit für den Sitzflansch 20 ausgebildet.

Durch das Betätigungsrohr 15 ist eine Betätigungsstange 21 hindurchgeführt, welche an ihrem unteren Ende mit dem vorlaufenden Ventilteller 7 verbunden ist und dessen oberes Ende durch einen ortsfesten, oberen Abschluss 22 des Doppeltellerventils durchführt und mit einem flanschartigen Kopfteil 23 abschliesst. Die Betätigungsstange 21 ist auf ihrem unteren Teilstück mit einer axialen Bohrung 24 zur Zufuhr von Reinigungsflüssigkeit zum Leckkontrollraum 9 ausgebildet. Die Verbindung zwischen dem Leckkontrollraum und der axialen Bohrung 24 wird durch radial in den Leckkontrollraum 9 mündende Spritzbohrungen 25 hergestellt. Die Zufuhr der Reinigungsflüssigkeit erfolgt am oberen Ende der Bohrung 24 über einen im Zwischengehäuse 4 angeordneten Anschluss 26 durch ein Langloch 27 in dem Betätigungsrohr 15 hindurch. Die Betätigungsstange 21 weist im Bereich zwischen dem Abschluss 22 des Doppeltellerventils und dem ortsfesten Anschlag 19 des Zwischengehäuses 4 eine im Querschnitt U-förmig ausgebildete Betätigungsplatte 28 auf, die sich über eine untere Rückstellfeder 29 am Sitzflansch 20 und über eine obere Rückstellfeder 30 an dem oberen Abschluss 22 abstützt.

Ein Anschlag 31 ist in einem vorbestimmten Abstand A vom Flansch 20a als Kopf eines Anschlagkörpers 31a ausgebildet, welcher durch eine entsprechende Öffnung im peripheren Bereich des Flansches 20a hindurchreichend an einer Wandung 19 des Zwischengehäuses 4 befestigt ist. Es können natürlich auch mehrere Anschlagkörper 31a und Anschläge 31 in Form von Bolzen beispielsweise verwendet werden. Der Anschlag 31 dient zur Begrenzung der noch zu beschreibenden Bewegung des Ventiltellers 8 innerhalb des Ventilsitzes 6 zur Durchführung der Reinigung der Sitzfläche.

Ein das Betätigungsrohr 15 umgebender oberer Metall-Faltenbalg 32 ist flüssigkeitsdicht mit der Oberseite des nachlaufenden Ventiltellers 8 und der oberen Rohrwandung 17 verschweisst. In gleicher Weise umgibt ein unterer Metall-Faltenbalg 33 das Ableitungsrohr 11 und ist ebenfalls flüssigkeitsdicht mit der Unterseite des vorlaufenden Ventiltellers 7 und der unteren Rohrwandung 13 verschweisst.

Anstelle der Metall-Faltenbälge können auch Faltenbälge aus gleichwertigen Werkstoffen, wie Teflon beispielsweise, verwendet werden.

Im Folgenden wird die Funktion des erfindungsgemässen Doppeltellerventils beschrieben.

Bei geschlossenem Ventil sind beide Ventilteller 7, 8 innerhalb des Ventilsitzes 6 mit einem gegenseitigen Abstand zwischen den nicht eingesenkten Ringflächen der einander zugewandten Seiten der Ventilteller angeordnet. In dieser Schliessstellung S wird die Position des nachlaufenden Ventiltellers 8 dadurch fixiert, dass der Sitzflansch 20 des Betätigungsrohres 15 durch die untere Rückstellfeder 29 über den Flansch 20a gegen den ortsfesten Anschlag 19 gepresst wird. Die Fixierung der Position des vorlaufenden Ventiltellers 7 in der Schliessstellung S kann im wesentlichen durch die Abstimmung von Rückstellfedern bestimmt werden. Es kann aber auch ein zusätzlicher Anschlag benutzt werden.

Der Leckkontrollraum 9 ist durch die Anordnung der Ventilteller mit oben erwähntem gegenseitigen Abstand geöffnet. Er wird lediglich durch eine noch zu beschreibende Dichtung zwischen den Ventiltellern 7, 8 und dem Ventilsitz 6 gegenüber den Produktleitungen 2 und 3 abgedichtet. Im Falle einer Abnutzung oder Beschädigung dieser Dichtung kann Produktflüssigkeit aus den Produktleitungen 2 und 3 in den Leckkontrollraum 9 eindringen und über das Ableitungsrohr 11 nach aussen abfliessen, wodurch in einfacher Weise Undichtigkeiten des Ventilsitzes angezeigt werden.

Um das Ventil in die Offenstellung O zu bringen, wird in einer hier nicht dargestellten Weise die Betätigungsplatte 28 nach oben gegen die Kraft der Rückstellfeder 30 bewegt. Dabei wird der vorlaufende Ventilteller 7 über die Betätigungsstange 21 bis zur Anlage an den noch in der Schliessstellung S verharrenden nachlaufenden Ventilteller 8 verfahren. Dadurch ist der Leckkontrollraum 9 geschlossen. Durch die weitere Aufwärtsbewegung der U-förmig ausgebildeten Betätigungsplatte 28 bis zur Anlage ihrer Schenkel an den Abschluss 22 werden beide Ventilteller 7, 8 nach oben in die Offenstellung O bewegt. Produktflüssigkeit kann nun von der unteren Produktleitung 2 in die obere Produktleitung 3 oder auch umgekehrt fliessen. Da der Leckkontrollraum, wie im Vorstehenden beschrieben, geschlossen ist, kann keine Produktflüssigkeit in denselben gelangen. Eine Leckage ist somit ausgeschlossen.

Der Schliessvorgang des Ventils erfolgt in umgekehrter Weise dadurch, dass die Rückstellfeder 30 die Betätigungsplatte 28 und die Rückstellfeder 29 den Sitzflansch 20 nach unten bewegen. Die Schliessstellung S ist erreicht. Der Öffnungs- bzw. Schliesshub ist durch den Pfeil P angedeutet. Die Ventilteller 7, 8 werden während ihrer Öffnungs- und Schliessbewegung und hier insbesondere während der kritischen Phase des Eindringens in den Ventilsitz in optimaler Weise beidseitig geführt, d.h. durch die gegenseitige Führung von Betätigungsstange und -rohr auf der oberen Seite und durch die Führung des Ableitungsrohrs durch die Wandung der unteren Produktleitung. Dies bedeutet eine Verbesserung der sicheren Abdichtung auch für einen längeren Benutzungszeitraum.

Zur Durchführung einer Reinigung der Ventilteller 7, 8 und des Ventilsitzes 6, genauer gesagt, der einander zugewandten Seiten der Ventilteller und deren Sitzflächen, wird eine Reinigungsflüssigkeit durch den Anschluss 26 über die Bohrung 24 der hohlen Betätigungsstange 21 und die Spritzbohrungen 25 in den Leckkontrollraum 9 eingespritzt. Durch die radiale Ausrichtung der Spritzbohrungen 25 wird erreicht, dass die Flüssigkeitsstrahlen gezielt auf die am stärksten verschmutzten Stellen, nämlich den zwischen den Sitzflächen befindlichen Bereich des Ventilsitzes und die Randbereiche der Ventilteller auftreffen. Die Reinigungsflüssigkeit und das abgereinigte Material fliessen sodann über die Stichbohrungen 14 über das Ableitungsrohr 11 nach aussen ab.

Zur Reinigung der Sitzflächen, die von den Ventiltellern während der Schliessstellung eingenommen werden, ist eine gegenläufige Bewegung beider Ventilteller vorgesehen. In hier nicht dargestellter Weise wird die Betätigungsstange 21 und damit der vorlaufende Ventilteller 7 nach unten bis zur Anlage an einen hier nicht gezeigten Anschlag bewegt. Die Sitzfläche des Ventiltellers 7 ist somit für Reinigungsflüssigkeit erreichbar. Zur Freilegung der Sitzfläche des nachlaufenden Ventiltellers 8 wird durch eine Stelleinrichtung der Flansch 20a nach oben bis zur Anlage an den Anschlag 31 bewegt. Die Reinigung kann nun in der vorerwähnten Art durchgeführt werden. Auch hier besteht keine Gefahr des Eindringens von Reinigungsflüssigkeit in die Produktleitungen, da die Bewegung der Ventilteller lediglich innerhalb des Ventilsitzes entsprechend dem Abstand A zwischen dem Anschlag 31 und dem Flansch 20a erfolgt.

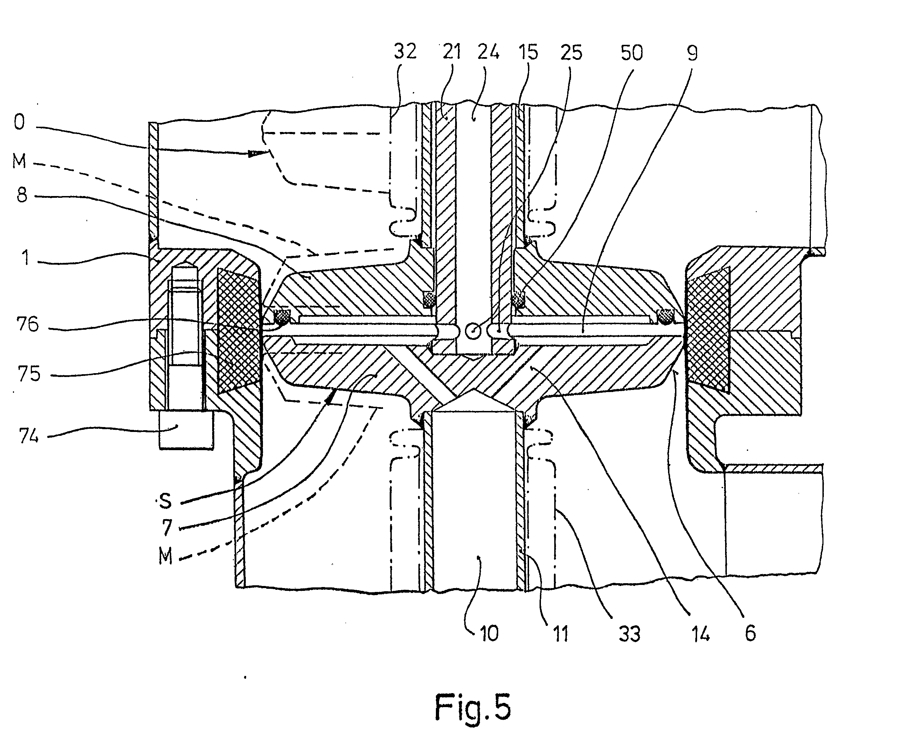

Der dieser gegenläufigen Bewegung entsprechende Hub ist durch die Pfeile R und T in Fig. 1 angedeutet. Die mit M bezeichneten, gestrichelten Linien in Fig. 5 zeigen die Stellung beider Ventilteller in der Reinigungsphase der Sitzflächen an.

Eine Reinigung kann ebenfalls bei geöffnetem Ventil ohne Gefahr der Kontamination der Produktflüssigkeiten durchgeführt werden. Durch die gegenseitige Anlage der Ventilteller 7 und 8 ist der Leckkontrollraum 9 nach aussen abgedichtet. Da der Leckkontrollraum kleiner ist, wird dieser besonders intensiv gereinigt.

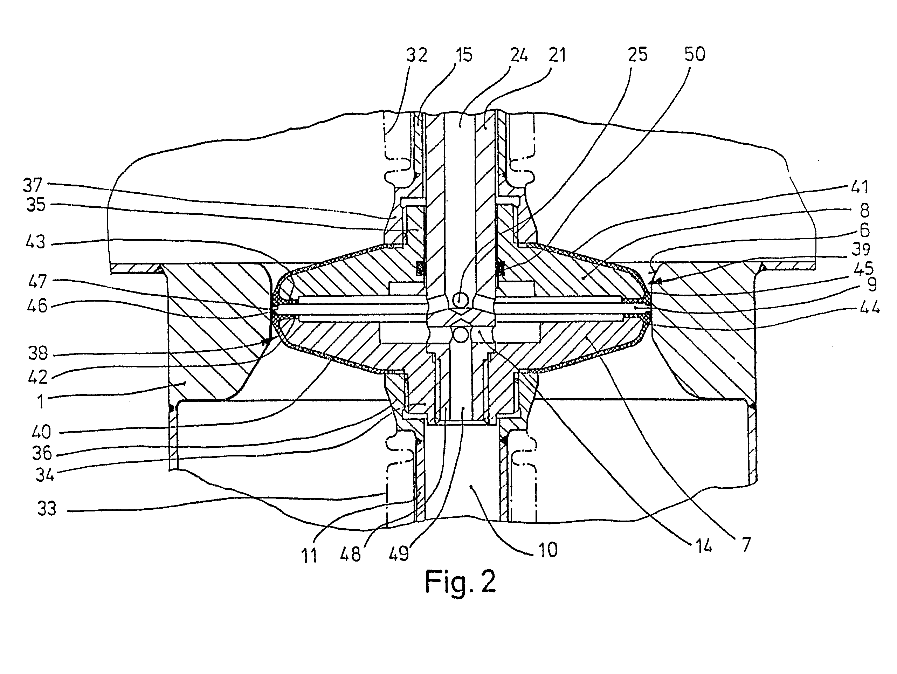

Die Figur 2 zeigt im vergrössertem Massstab die Ventilteller 7, 8 in ihrer Schliessstellung S. Im Unterschied zur Figur 1 sind die den Leckkontrollraum 9 bildenden Einsenkungen stufig ausgebildet, wobei die radial inneren Einsenkungen die tieferen sind.

Jeder Ventilteller 7 und 8 ist mit einem stufenförmigen Absatz 34 bzw. 35 ausgebildet.

Diese weisen auf ihrer äusseren zylindrischen Mantelfläche ein Gewinde auf. Je eine Hülse 36 und 37 mit Innengewinde ist mit dem Absatz 34 bzw. 35 verschraubt. Die Hülse 36 ist mit den oberen Enden des unteren Faltenbalgs 33 und des Ableitungsrohres 11 und die obere Hülse 37 mit den unteren Enden des oberen Faltenbalgs 32 und des Betätigungsrohres 15 flüssigkeitsdicht verschweisst.

Jeder Ventilteller 7 und 8 ist mit einer haubenartig aufgesetzten Dichtung 38 bzw. 39 versehen. Sie besteht aus einem der axial äusseren Oberfläche des Ventiltellers 7 und 8 anliegenden äusseren Haltering 40 bzw. 41, einem der axial inneren Oberfläche anliegenden inneren Haltering 42 bzw. 43 und einem den äusseren und den inneren Haltering 40 und 42 bzw. 41 und 43 verbindenden unteren Dichtring 44 bzw. oberen Dichtring 45. Die inneren Halteringe 42 und 43 bedecken die radial ausserhalb der Einsenkungen angeordneten Ringbereiche der einander zugewandten inneren Oberflächen der Ventilteller 7 und 8. Die äusseren Halteringe 40 und 41 erstrecken sich bis nahe zu den stufenförmigen Absätzen 34 bzw. 35 und sind zwecks Abdichtung zwischen den Hülsen 36 bzw. 37 und den korrespondierenden äusseren Oberflächenbereichen der Ventilteller 7 bzw. 8 eingeklemmt. Jeder Dichtring 44 und 45 ist in der Form eines Ringwulstes ausgebildet, welcher den Ventilteller 7 bzw. 8 auf der jeweils dem gegenüberliegenden Ventilteller 8 bzw. 7 zugewandten Seite in Form einer Lippe überragt. Die Lippe des unteren Dichtringes ist mit dem Bezugszeichen 46 und die des oberen Dichtringes mit dem Bezugszeichen 47 versehen. Der gegenseitige Abstand der beiden Lippen 46 und 47 ist geringer als der gegenseitige Abstand der inneren Halteringe 42 und 43. Diese Lippen 46 und 47 bewirken eine sichere Abdichtung des Ventils auch über einen längeren Benutzungszeitraum hinweg. Die Dichtungen 38 und 39 sind einteilig aus Gummi oder einem gummiähnlichen Werkstoff hergestellt und auf die Ventilteller 7 bzw. 8 aufvulkanisiert. Bei einer Einklemmung der äusseren Halteringe 40, 41 zwischen den Hülsen 36 bzw. 37 und den Absätzen 34 bzw. 35 kann die Schraubverbindung der Ventilteller 7, 8 mit den Hülsen 36 bzw. 37 dazu benutzt werden, die Dichtringe 44, 45 und deren Lippen 46 bzw. 47 gegebenenfalls zum Ausgleich von Verschleisserscheinungen nachzustellen.

Ein Auswechseln der Dichtungen 38 und 39 aufgrund von zu starken Verschleisserscheinungen wird einfach dadurch ausgeführt, dass die Schraubverbindungen der Ventilteller 7 und 8 mit den Hülsen 36 bzw. 37 gelöst werden. Im Falle des vorlaufenden Ventiltellers 7 allerdings ist ausserdem die Lösung einer Schraubverbindung mit einem Endstück 48 der Betätigungsstange 21 erforderlich. Dieses Endstück 48 ist sowohl mit den Spritzbohrungen 25 als auch den Stichbohrungen 14 versehen. Letztere sind hier zum einen mit der tieferen Einsenkung des Vorlaufventiltellers 7 und zum anderen mit einer die Verbindung zur Ableitungsbohrung 10 herstellenden Axialbohrung 49 verbunden. Eine Dichtung 50 ist zwischen dem nachlaufenden Ventilteller 8 und der Betätigungsstange 15 angeordnet.

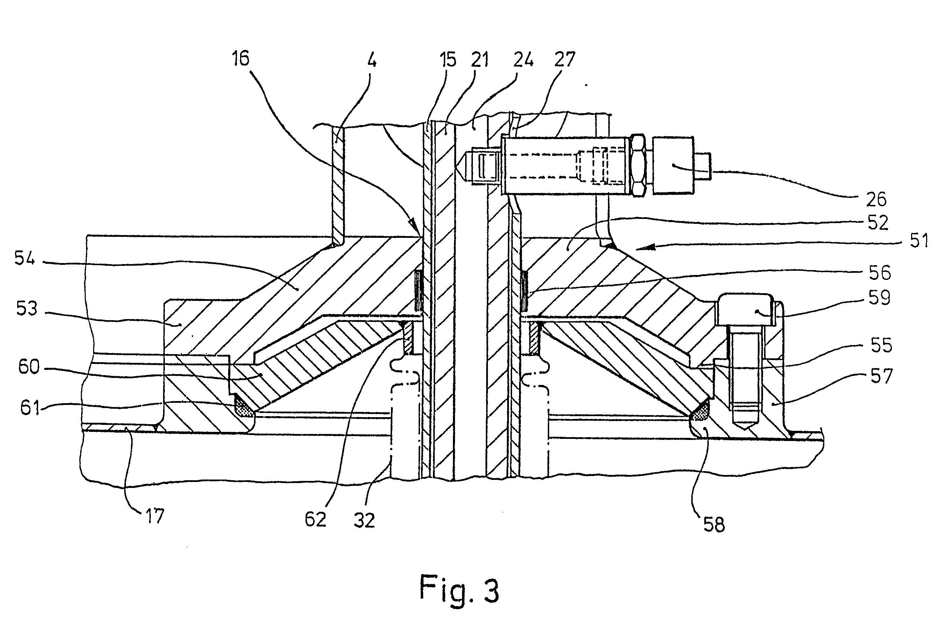

Figur 3 zeigt in vergrössertem Massstab den Durchtritt des Betätigungsrohres 15 und der Betätigungsstange 21 durch die Durchtrittsöffnung 16 in der Rohrwandung 17 der oberen Produktleitung 3 und die Befestigung des oberen Faltenbalgs 32 mit dieser Rohrwandung 17. Gleichzeitig ist der Anschluss 26 zur Zufuhr von Reinigungsflüssigkeit zur hohlen Betätigungsstange 21 in Form eines herkömmlichen Verbindungsstückes dargestellt. Die Durchtrittsöffnung 16 für das Betätigungsrohr 15 und die Betätigungsstange 21 ist in einem äusseren Trägerflansch 51 ausgebildet. Er besteht aus einem senkrecht zur Betätigungsstange 21 ausgerichteten zentralen Ringbereich 52 mit horizontaler Ober- und Unterseite, einem dazu parallelen, nach unten versetzten äusseren Ringbereich 53, ebenfalls mit horizontaler Ober- und Unterseite und einem beide verbindenden konisch ausgebildeten mittleren Ringbereich 54 mit parallelen Ober- und Unterseiten. Auf der Unterseite des äusseren Trägerflansches 51 ist an der Übergangsstelle zwischen dem äusseren und dem mittleren Ringbereich 53 und 54 ein nach unten weisender ringförmiger Vorsprung 55 ausgebildet. Das Zwischengehäuse 4 ist an der Oberseite des äusseren Trägerflansches 51 an der Übergangsstelle zwischen dem zentralen und mittleren Ringbereich 52 und 54 angeschweisst. Eine Führungsbuchse 56 ist zwischen dem Betätigungsrohr 15 und dem äusseren Trägerflansch 51 angeordnet.

Ein Ringflansch 57 mit nahezu quadratischem Querschnitt ist auf seiner radial inneren Fläche durch Ausbildung einer unteren Stufe 58 L-förmig ausgebildet. Er ist derart an die Rohrwandung 17 angeschweisst, dass er mit seiner Oberseite der Unterseite des äusseren Ringbereiches 53 und mit dem oberen Teil seiner radial inneren Seite dem ringförmigen Vorsprung 55 anliegt. Kopfschrauben 59 verbinden den äusseren Trägerflansch 51 und den Ringflansch 57.

Ein Deckel 60 ist unterhalb dieses Trägerflansches 51 derart angeordnet, dass ein Mittelteil des Deckels 60 mit rechteckigem Querschnitt parallel zum mittleren Ringbereich 54 und ein im Querschnitt dreieckförmiges, mit der Spitze zum Betätigungsrohr 15 weisendes inneres Endstück mit seiner Oberseite parallel zum zentralen Ringbereich 52 des äusseren Trägerflansches 51 verläuft. Ein äusseres Endstück mit planer Oberseite und abgeschrägter Unterseite ist am Mittelteil des Deckels 60 ausgebildet und in Anlage an den Trägerflansch 51 und den Ringflansch 57 zwischen dem ringförmigen Vorsprung 55 des äusseren Trägerflansches 51 und der Stufe 58 des Ringflansches 57 eingesetzt, wobei ein statische Dichtung 61 zwischen der abgeschrägten Unterseite des äusseren Endstücks und der Stufe 58 angeordnet ist. Die abgeschrägte Unterseite ist hierbei so ausgebildet, dass sie mit der Unterseite des Mittelteils des Deckels 60 ein mit der Spitze nach unten weisendes Dreieck einschliesst.

Eine das Betätigungsrohr 15 umgebende Hülse 62 ist einerseits mit dem oberen Ende des oberen Faltenbalgs 32 und andererseits mit der Spitze des inneren Endstückes des Deckels 60 flüssigkeitsdicht verschweisst.

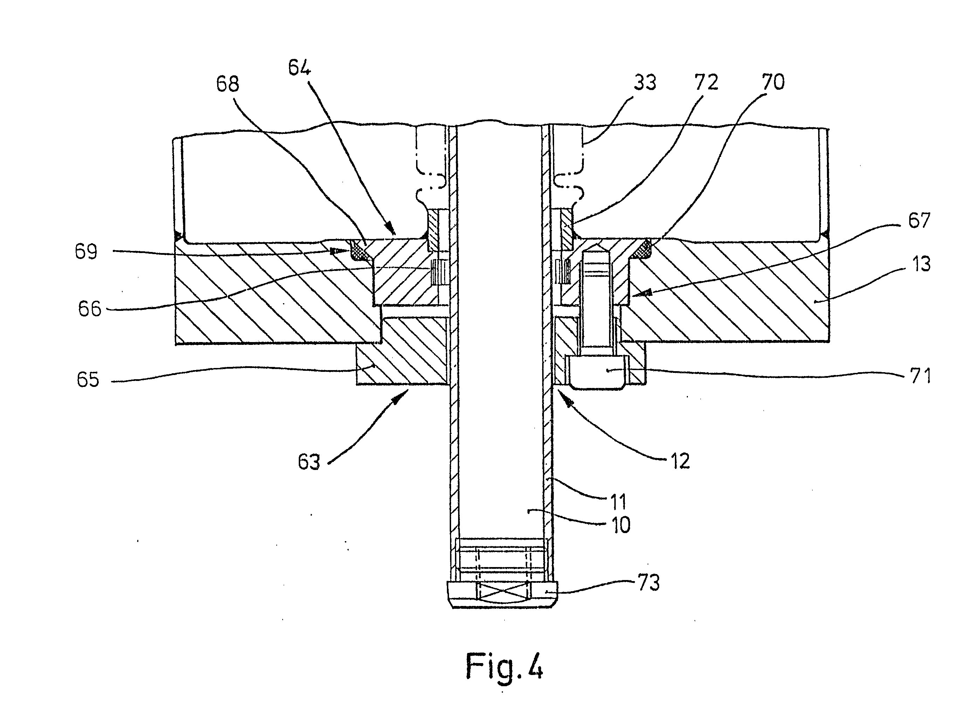

Figur 4 zeigt in vergrössertem Massstab den Durchtritt des Ableitungsrohres 11 durch die Durchtrittsöffnung 12 der Rohrwandung 13 der unteren Produktleitung 2 und die Befestigung des unteren Faltenbalges 33 an dieser Rohrwandung 13.

Die Durchtrittsöffnung 12 ist in einem äusseren Spannflansch 63 und einem darüber angeordneten inneren Deckel 64 ausgebildet, die beide zwischen dem Ableitungsrohr 11 und der Rohrwandung 13 eine Öffnung in derselben ausfüllend angeordnet sind. Der äussere Spannflansch 63 ist hierbei mit einem umlaufenden Absatz 65 versehen, mit welchem er der Rohrwandung 13 anliegt. Eine Führungsbuchse 66 ist zwischen dem Deckel 64 und dem Ableitungsrohr 11 angeordnet. Der innere Deckel 64 sitzt mit seiner Unterseite einem in der Öffnung der Rohrwandung 13 ausgebildeten Anschlag 67 auf. Der innere Deckel 64 weist an seiner Oberseite einen überstehenden ringförmigen Ansatz 68 auf, dessen untere Seite abgeschrägt ist. Zwischen dieser Schräge und einer zugeordneten Ausnehmung 69 in der Rohrwandung 13 ist eine statische Dichtung 70 angeordnet. Kopfschrauben 71 verbinden den äusseren Spannflansch 63 und den inneren Deckel 64. Eine das Ableitungsrohr 11 umgebende Hülse 72 ist mit dem unteren Ende des Faltenbalges 33 und dem inneren Deckel 64 flüssigkeitsdicht verschweisst. Das Ableitungsrohr 11 ist an seinem unteren Ende mit einem einschraubbaren Verschlussstück 73 versehen, der die Beschädigung des Faltenbalgs beim Ausbau verhindert.

Es ist zu erkennen, dass nach Lösen der Kopfschrauben 71 und 59 das Ableitungsrohr 11, die Ventilteller 7 und 8, das Betätigungsrohr 15 und die Betätigungsstange 21 nach oben aus dem Ventil ausbaubar sind, wobei die lösbare Verbindung der Ventilteller mit der Betätigungsstange bzw. mit dem Ableitungsrohr eine wichtige Rolle spielen. Wichtig ist auch, dass der Verschlussteil kostengünstig gestaltet sein kann.

In Figur 5 ist als zweites Ausführungsbeispiel eine andere Art der Abdichtung gezeigt. Hierbei ist das Gehäuse 1 im Gegensatz zu dem vorhergehenden Ausführungsbeispiel zweiteilig ausgebildet, wobei beide Teile durch Kopfschrauben miteinander verbunden sind.

Der Grossteil des Ventilsitzes wird gebildet durch einen trapezförmigen Dichtungsring 75, welcher in einer entsprechenden Nut im zweiteiligen Gehäuse eingespannt ist. Die Breite dieses Dichtungsrings 75 ist grösser als der gegenläufige Hub, den beide Ventilteller 7, 8 zum Zwecke der Reinigung durchführen. Zur Abdichtung des Leckkontrollraums ist eine Dichtung 76 vorgesehen, die in einer an der Unterseite des nachlaufenden Ventils 8 ausgebildeten Nut vorgesehen ist. Die Nut ist hierbei in dem nicht eingesenkten Ringbereich des Ventiltellers ausgebildet. Aufgrund dieser Dichtungen 75 und 76 ist die im vorhergehenden Ausführungsbeispiel beschriebene Dichtung 38 und 39 nicht erforderlich.

Die Ventilteller 7 und 8 sind gemäss Figur 5 direkt mit dem Ableitungsrohr 11 und dem unteren Faltenbalg 33 bzw. dem Betätigungsrohr 15 und dem oberen Faltenbalg 32 flüssigkeitsdicht verschweisst. Eine lösbare Verbindung der Ventilteller 7, 8 ist somit nicht vorgesehen. Ebenso ist die Betätigungsstange 21 direkt mit dem vorlaufenden Ventilteller 7 verschweisst. Die den Leckkontrollraum bildenden Einsenkungen und die Stichbohrungen sind gemäss Fig. 1 ausgebildet.

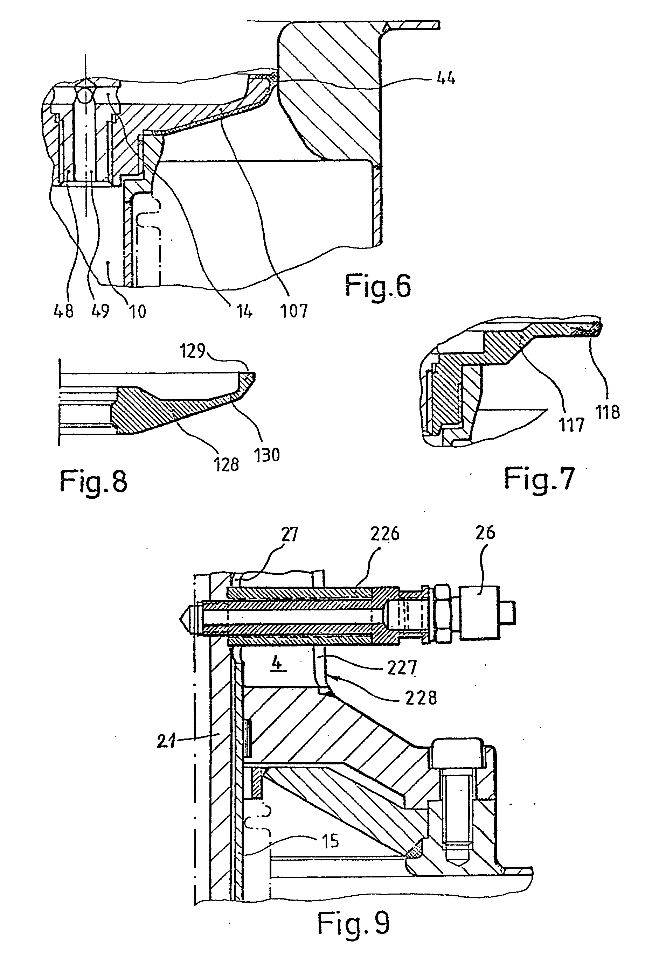

In der Fig. 6 ist die Ausbildung eines Ventiltellers 107 gezeigt, der im allgemeinen mit dem Ventilteller 7 der Fig. 2 übereinstimmt, aber in seiner Wandstärke glockenförmig ausgehöhlt ist, so dass ein Abrieb der Dichtung 44 durch eine Federung des Ventiltellers 107 in radialer Richtung ausgeglichen wird, wobei der Ventilteller 107 aus Metall bestehen kann.

Die Fig. 7 zeigt die rechte Hälfte eines ähnlich wie in Fig. 6 ausgebildeten Ventiltellers 117, der infolge der Verringerung der Wandstärke ebenfalls federnd ausgebildet ist, wobei aber im Dichtbereich eine Profildichtung 118 eingesetzt ist, um bei besonders abrasiven Medien einen schnellen und preisgünstigen Dichtungswechsel vornehmen zu können.

In der Fig. 8 ist im Schnitt die rechte Hälfte eines Ventiltellers gezeigt, der am äusseren Umfang eine Dichtwulst 129 aufweist und insgesamt aus Kunststoff besteht. Infolge einer Verringerung der Wandstärke in demjenigen Bereich 130, der sich an die Dichtwulst 129 anschliesst, ergibt sich auch bei diesem Ventilteller 128 eine elastische Federung in radialer Richtung.

Wie aus der Fig. 1 ersichtlich, ist der Metall-Faltenbalg 32 mit seinem oberen Ende an der oberen Rohrwandung 17 angeschweisst. Sein unteres Ende, das mit der Oberseite des nachlaufenden Ventiltellers 8 angeschweisst ist, kann eine Drehung dieses Ventiltellers 8 mitmachen. Dabei ergibt sich jedoch eine Torsionsspannung, welche die Lebensdauer des Faltenbalges 32 beträchtlich herabsetzt.

Die gleiche Gefahr besteht für den Faltenbalg 33.

In der Fig. 9 ist eine Verdrehsicherung für beide Faltenbälge 32 und 33 gezeigt.

Zu diesem Zweck ist der in Fig. 3 ersichtliche Anschlussstutzen 26 mit einer Aussenhülse 226 versehen, die einen viereckigen Aussenquerschnitt aufweist, der so gross bemessen ist, dass sich zwei seiner Flächen an den Rändern des Langloches 27 und an Rändern 227 eines Durchbruches 228 im Zwischengehäuse 4 abstützen.

Der Anschlussstutzen 26 ist mit seinem vorderen Ende in die Betätigungsstange 21 eingeschraubt und so mit dem Ventilteller 7 und damit auch mit dem Faltenbalg 33 verbunden.

Die viereckige Aussenhülse 226 ist im formschlüssigen Eingriff mit dem Langloch 27 und so über das Betätigungsrohr 15 des Ventiltellers 8 mit dem Faltenbalg 32 verbunden.

Andererseits ist die Aussenhülse 226 im formschlüssigen Eingriff mit den Rändern des Durchbruches 228 des Zwischengehäuses 4.

Dadurch sind die beiden Faltenbälge 32 und 33 auf eine einfache Art und Weise an einer Verdrehung gehindert.

**Patentansprüche**

1. Doppelsitzventil mit zwei voneinander unabhängig bewegbaren Ventiltellern (7, 8), die mit einem im Ventilgehäuse zwischen einem Zuflussrohr (3) und einem Abflussrohr (2) für das Produkt angeordneten Ventilsitz (6) zusammenwirken und sowohl in der Offenstellung als auch in der Schliessstellung einen Leckkontrollraum (9) zwischen sich einschliessen, der bei geöffnetem Ventil infolge einer Verringerung des Abstandes zwischen beiden Ventiltellern (7, 8) abgedichtet ist, in dem einer der Ventilteller (7) beim Öffnen des Ventils vorläuft und nach einem bestimmten Hub am anderen Ventilteller (8) zur Anlage kommt und beide Ventilteller (7, 8) dann durch eine Federkraft mit Abdichtungen (76) gegeneinandergepresst sind, wobei der vorlaufende Ventilteller (7) an einer hohlen Betätigungsstange (21) befestigt ist, durch welche dem Leckkontrollraum (9) Reinigungsflüssigkeit über radial in diesen Raum mündende Spritzbohrungen (25) zuführbar ist, die durch ein mit dem Leckkontrollraum in Verbindung stehendes Ableitungsrohr (10) nach aussen abführbar ist und wobei der nachlaufende Ventilteller (8) mit einem Betätigungsrohr (15) verbunden ist, durch welches sich die Betätigungsstange (21) des vorauslaufenden Ventiltellers (7) hindurch erstreckt, dadurch gekennzeichnet, dass Betätigungsstange (21) und Betätigungsrohr (15) eine gegenseitige Führung bilden, dass der Sitz der beiden Ventilteller (7, 8) als zylindrischer Ventilsitz (6) ausgebildet ist, dass die Ventilteller (7, 8) derart gegenläufig beweglich sind, dass sie ihre der Schliessstellung entsprechende Sitzflächen freigeben, ohne dabei den Ventilsitz (6) zu verlassen.

2. Doppeltellerventil nach Anspruch 1, dadurch gekennzeichnet, dass jeder Ventilteller (7, 8) im zylindrischen Ventilsitz (6) axial gegen einen Anschlag verschiebbar ist.

3. Doppeltellerventil nach Anspruch 1 oder 2, dadurch gekennzeichnet, dass das Ventilgehäuse (1) derart einstückig ausgebildet ist, dass der zylindrische Ventilsitz (6) fugenlos gestaltet ist.

4. Doppeltellerventil nach wenigstens einem der Ansprüche 1–3, dadurch gekennzeichnet, dass die Dichtung jedes Ventiltellers (7, 8) aus einem den äusseren Umfang des Ventiltellers überragenden Dichtring (44 bzw. 45) und aus zwei sich beiderseits an den Dichtring (44, 45) anschliessenden Halteringen (40, 42 bzw. 41, 43) besteht, die auf der Ober- bzw. Unterseite des Ventiltellers (7 bzw. 8) anliegen, bis in den Bereich der Verbindungen der Ventilteller (7, 8) mit der Betätigungsstange (21), bzw. dem Betätigungsrohr (15) reichen und diese Verbindungen abdichten.

5. Doppeltellerventil nach Anspruch 4, dadurch gekennzeichnet, dass der Dichtring (44, 45) mit den Halteringen (40, 42 bzw. 41, 43) ein- oder mehrteilig aus Gummi oder gummiähnlichem Werkstoff hergestellt und auf den Ventilteiler (7 bzw. 8) aufvulkanisiert ist.

6. Doppelventilteller nach Anspruch 5, dadurch gekennzeichnet, dass der Dichtring (44, 45) als Ringwulst (46, 47) ausgebildet ist, der die jeweils dem anderen Ventilteller (8 bzw. 7) zugewandte Seite des einen Ventiltellers (7 bzw. 8) überragt.

7. Doppelventilteller nach mindestens einem der Ansprüche 1 bis 6, dadurch gekennzeichnet, dass das Ableitungsrohr (11) für die Reinigungsflüssigkeit an den vorlaufenden Ventilteller (7) angeschlossen und mit dem Leckkontrollraum (9) durch Stichbohrungen (14, 49) verbunden ist.

8. Doppeltellerventil nach mindestens einem der Ansprüche 1 bis 7, dadurch gekennzeichnet, dass das Betätigungsrohr (15) und die Betätigungsstange (21) durch eine mit einem Deckel (60) verschliessbare Öffnung (16) des Zuflussrohres (3) für das Produkt geführt und gegenüber dem Produkt durch einen am Deckel (60) und am nachlaufenden Ventilteller (8) abgedichtet befestigten Faltenbalg (32) hermetisch abgeschlossen sind, dass ausserdem das Ableitungsrohr (11) für die Reinigungsflüssigkeit durch eine mit einem Deckel (64) verschliessbare Öffnung (12) des Abflussrohres (2) für das Produkt geführt und gegenüber dem Produkt durch einen am Deckel (64) und am vorlaufenden Ventilteller (7) abgedichtet befestigten Faltenbalg (33) hermetisch abgeschlossen ist.

9. Doppeltellerventil nach Anspruch 8, dadurch gekennzeichnet, dass jeder Faltenbalg (32, 33) als Metallbalg ausgebildet und mit den Enden am zugehörigen Deckel (60 bzw. 64) sowie am Ventilteller (8 bzw. 7) dicht angeschweisst ist.

10. Doppeltellerventil nach Anspruch 8 oder 9, dadurch gekennzeichnet, dass zwischen jedem Deckel (60, 64) und dem Gehäuse (1) eine statische Dichtung (61 bzw. 70) angebracht ist.

11. Doppeltellerventil nach mindestens einem der Ansprüche 8 bis 10, dadurch gekennzeichnet, dass der Deckel (64) für die Öffnung (12) des Abflussrohres (2) für das Produkt mittels eines äusseren Spannflansches (63) von innen gegen die statische Dichtung (70) gedrückt ist.

12. Doppeltellerventil nach mindestens einem der Ansprüche 8 bis 11, dadurch gekennzeichnet, dass der Deckel (60) für die Öffnung (16) des Zuflussrohres (3) mit einem an diesem angeschweissten Ringflansch (57) zusammenwirkt und mittels eines äusseren Trägerflansches (51) von aussen gegen die statische Dichtung (61) gedrückt ist, wobei der Trägerflansch (51) als Träger des gesamten Doppeltellerventils dient.

13. Doppeltellerventil nach mindestens einem der Ansprüche 1 bis 12, dadurch gekennzeichnet, dass als Anschlag für den im Ventilsitz bewegbaren, nachlaufenden Ventilteller (8) ein Anschlag (31) am Ventilgehäuse (4, 19) in einem der Bewegung entsprechenden Abstand (A) von einem Flansch (20a) befestigt ist, welcher unterhalb des als Sitzflansch (20) ausgebildeten oberen Endes des Betätigungsrohres (15) angeordnet und durch eine auf den Sitzflansch (20) wirkende Federkraft einen dem Anschlag (31) gegenüberliegenden ortsfesten Anschlag (19) gepresst ist.

14. Doppeltellerventil nach wenigstens einem der Ansprüche 1 bis 13, dadurch gekennzeichnet, dass zur Abdichtung der Ventilteller (7, 8) gegenüber dem Ventilsitz (6) im Gehäuse (1) ein Dichtungsring (75) angebracht ist, dessen Breite wenigstens dem maximal einstellbaren Abstand beider Ventilteller (7, 8) innerhalb des Ventilsitzes (6) entspricht.

15. Doppeltellerventil nach Anspruch 14, dadurch gekennzeichnet, dass zur gegenseitigen Abdichtung der Ventilteller (7, 8) in ihrer Offenstellung (O) ein Abdichtring (76) im peripheren Bereich der dem Leckkontrollraum (9) zugewandten Seite des vorlaufenden und/oder des nachlaufenden Ventiltellers (7 bzw. 8) vorhanden ist.

16. Doppeltellerventil nach mindestens einem der Ansprüche 1 bis 14, dadurch gekennzeichnet, dass mindestens einer der Ventilteller (7 oder 8) zumindest im Abdichtungsbereich elastisch verformbar ausgebildet ist.

17. Doppeltellerventil nach Anspruch 16, dadurch gekennzeichnet, dass jeder elastische Ventilteller (7 oder 8) im Abdichtungsbereich eine die Elastizität bewirkende geringe Wandstärke aufweist.

18. Doppeltellerventil nach Anspruch 16, dadurch gekennzeichnet, dass der Ventilteller (7 oder 8) aus einem elastisch verformbaren Kunststoff besteht.

19. Doppeltellerventil nach Anspruch 18, dadurch gekennzeichnet, dass die Dichtungen (38 oder 39) des Doppeltellerventils (7 oder 8) mit dem Ventilteller einstückig aus Kunststoff hergestellt ist.

20. Doppeltellerventil nach mindestens einem der Ansprüche 1 bis 19, dadurch gekennzeichnet, dass Betätigungsstange (21) und Betätigungsrohr (15) gegeneinander drehgesichert sind, indem der Anschlussstutzen (26) für die Zufuhr der Reinigungsflüssigkeit sich einerseits in einem Langloch (27) im Betätigungsrohr (15) abstützt, andererseits mit seinem Ende an der Betätigungsstange (21) befestigt ist.

**Revendications**

1. Soupape à double siège avec deux disques de soupape mobiles indépendamment l'un de l'autre (7), (8) qui coopèrent avec un siège de soupape (6) disposé dans le corps de soupape entre un tuyau d'arrivée (3) et un tuyau de départ (2) pour le produit et qui, tant dans la position d'ouverture que dans la position de fermeture, ferment un espace de contrôle des fuites (9) qui, lorsque la soupape est ouverte, est fermé par suite d'une réduction de la distance entre les deux disques de soupape (7), (8), dans laquelle un des disques de soupape (7) avance lors de l'ouverture de la soupape et, après une course déterminée, vient buter contre l'autre disque de soupape (8) et les deux disques de soupape (7, 8) sont alors pressés l'un contre l'autre avec des joints (76) par une force élastique, le disque de soupape qui avance (7) étant fixé à une tige de manœuvre creuse (21) par laquelle un liquide de nettoyage peut être amené à l'espace de contrôle des fuites (9) par l'intermédiaire d'orifices d'injection qui débouchent radialement dans cet espace, le liquide de nettoyage étant ensuite évacué à l'extérieur par un tube d'évacuation (10) qui communique avec l'espace de contrôle des fuites (9) et le disque de soupape qui recule (8) étant solidaire d'un tube de manœuvre (15) dans lequel la tige de manœuvre (21) du disque de soupape qui avance (7) s'étend d'un bout à l'autre, caractérisé en ce que la tige de manœuvre (21) et le tube de manœuvre (15) forment chacun un guide pour l'autre, que le siège des deux disques de soupape (7), (8) est réalisé sous la forme d'un siège de soupape cylindrique (6), et que les disques de soupape (7), (8) sont mobiles l'un par rapport à l'autre de telle façon qu'ils libèrent leurs surfaces d'appui correspondant à la position de fermeture sans quitter le siège de soupape (6).

2. Soupape à double disque selon la revendication 1, caractérisée en ce que chaque disque de soupape (7), (8) peut être déplacé axialement vers une butée dans le siège de soupape cylindrique (6).

3. Soupape à double disque selon la revendication 1 ou 2, caractérisée en ce que le corps de soupape (1) est réalisé d'une seule pièce de telle façon que le siège de soupape cylindrique (6) ne comporte pas de joint.

4. Soupape à double disque selon l'une des revendications précédentes, caractérisée en ce que le joint de chaque disque de soupape (7), (8) est formé d'un anneau d'étanchéité (44), (45), respectivement, débordant de la périphérie extérieure du disque de soupape et de deux anneaux de retenue (40), (42) ou (41), (43), respectivement, prolongeant les anneaux d'étanchéité (44), (45) des deux côtés, ces anneaux de retenue étant en contact avec les faces respectivement supérieure et inférieure du disque de soupape (7) ou (8), respectivement, jusque dans la zone des liaisons des disques de soupape (7), (8) avec la tige de manœuvre (21) et le tube de manœuvre (15), respectivement, et assurant l'étanchéité de ces liaisons.

5. Soupape à double disque selon la revendication 4, caractérisée en ce que l'anneau d'étanchéité (44), (45) avec les anneaux de retenue (40), (42) ou (41), (43), respectivement, est réalisé en une ou plusieurs pièces en caoutchouc ou en matière analogue au caoutchouc et vulcanisé sur le disque de soupape (7), (8), respectivement.

6. Soupape à double disque selon la revendication 5, caractérisée en ce que l'anneau d'étanchéité (44), (45) est réalisé sous la forme d'un bourrelet (46), (47), respectivement, qui fait saillie sur la face d'un disque de soupape (7), (8), respectivement, tournée vers l'autre disque de soupape (8), (7), respectivement.

7. Soupape à double disque selon l'une des revendications précédentes, caractérisée en ce que le tube d'évacuation (11) pour le liquide de nettoyage est raccordé au disque de soupape qui avance (7) et mis en communication avec l'espace de contrôle des fuites par des orifices collecteurs (14), (49).

8. Soupape à double disque selon l'une des revendications précédentes, caractérisée en ce que le tube de manœuvre (15) et la tige de manœuvre (21) passent par une ouverture (16) du tuyau d'arrivée (3) pour le produit fermée par un couvercle (60) et sont séparés du produit de façon hermétique par un soufflet (32) fixé de façon étanche au couvercle (60) et au disque de soupape qui recule (8), et que le tube d'évacuation (11) pour le liquide de nettoyage passe par une ouverture (12) du tuyau de départ (2) pour le produit fermée par un couvercle (64) et est séparé du produit de façon hermétique par un soufflet (33) fixé de façon étanche au couvercle (64) et au disque de soupape qui avance (7).

9. Soupape à double disque selon la revendication 8, caractérisé en ce que chaque soufflet (32), (33) est réalisé sous la forme d'un soufflet métallique et est soudé de façon étanche par ses extrémités au couvercle associé (60) ou (64), respectivement, et au disque de soupape associé (7) ou (8), respectivement.

10. Soupape à double disque selon la revendication 8 ou 9, caractérisée en ce qu'un joint statique (61), (70) est monté entre chaque couvercle (60), (64), respectivement, et le corps de soupape (1).

11. Soupape à double disque selon l'une des revendications 8 à 10, caractérisée en ce que le couvercle (64) pour l'ouverture (12) du tuyau de départ (2) pour le produit est pressé de l'intérieur contre le joint statique (70) au moyen d'une bride de serrage extérieure (63).

12. Soupape à double disque selon l'une des revendications 8 à 11, caractérisée en ce que le couvercle (60) pour l'ouverture (16) du tuyau d'arrivée (3) coopère avec une bride annulaire (57) soudée à ce tuyau et est pressé de l'extérieur contre le joint statique (61) au moyen d'une bride porteuse extérieure (51), cette bride servant de support pour la soupape complète.

13. Soupape à double disque selon l'une des revendications précédentes, caractérisée en ce que, comme butée pour le disque de soupape qui recule (8), mobile dans le siège de soupape (6), une butée (31) est fixée au corps de soupape (4), (19) à une distance (A) d'une bride (20a) correspondant à la longueur du mouvement, cette butée étant disposée au-dessous de l'extrémité supé-

rieure du tube de manœuvre (15) réalisée sous la forme d'une bride d'appui (20) et pressée contre une butée fixe (19) située en face de la butée (31) par une force élastique qui agit sur la bride d'appui (20).

14. Soupape à double disque selon l'une des revendications précédentes, caractérisé en ce que, pour obtenir l'étanchéité entre les disques de soupape (7), (8) et le siège de soupape (6), un anneau d'étanchéité (75) est monté dans le corps de soupape (1), la largeur de cet anneau correspondant au moins à la distance réglable maximale entre les deux disques de soupape (7), (8) à l'intérieur du siège de soupape (6).

15. Soupape à double disque selon la revendication 14, caractérisée en ce que, pour assurer l'étanchéité mutuelle des deux disques de soupape (7), (8) dans leur position d'ouverture (O), un anneau d'étanchéité (76) est prévu dans la zone périphérique de la face du disque de soupape qui avance (7) ou du disque de soupape qui recule (8) tournée vers l'espace de contrôle des fuites (9), ou de cette face des deux disques.

16. Soupape à double disque selon l'une des revendications 1 à 14, caractérisée en ce qu'au moins un des disques de soupape (7), (8) est déformable élastiquement au moins dans la zone d'étanchéité.

17. Soupape à double disque selon la revendication 16, caractérisée en ce que chaque disque de soupape élastique (7), (8) comporte une paroi à faible épaisseur créant l'élasticité dans la zone d'étanchéité.

18. Soupape à double disque selon la revendication 16, caractérisée en ce que le disque de soupape (7), (8) est constitué d'une matière plastique déformable élastiquement.

19. Soupape à double disque selon la revendication 18, caractérisée en ce que les joints (38), (39) des disques de soupape (7), (8), respectivement, sont réalisés d'une seule pièce en matière plastique.

20. Soupape à double disque selon l'une des revendications précédentes, caractérisée en ce que la tige de manœuvre (21) et le tube de manœuvre (15) sont empêchés de tourner l'un par rapport à l'autre par le fait que le raccord tubulaire (26) pour l'arrivée du liquide de nettoyage prend appui contre les côtés d'un trou ovale (27) ménagé dans le tube de manœuvre (15), d'une part, et est fixé à la tige de manœuvre (21) par son extrémité, d'autre part.

**Claims**

1. Double-seat valve with two valve discs (7, 8) which are movable independently of one another and interact with a valve seat (6) located in the valve housing between an inflow pipe (3) and a flow-off pipe (2) for the product, and which, both in the open position and in the closed position, enclose between them a leakage monitoring space (9) which, when the valve is opened, is sealed off as a result of a reduction in the distance between the two valve discs (7, 8), because when the valve is opened one of the valve discs (7) leads and after a specific stroke comes up against the other valve disc (8), and the two valve discs (7, 8) are then pressed against one another with seals (76) by means of a spring force, the leading valve disc (7), being fastened to a hollow actuating rod (21), through which it is possible to supply to the leakage monitoring space (9), via spray bores (25) opening radially into this space, cleaning fluid which can be discharged outwards through an outlet pipe (10) connected to the leakage monitoring space, and the following valve disc (8) being connected to an actuating tube (15), through which extends the actuating rod (21) of the leading valve disc (7), characterised in that the actuating rod (21) and actuating tube (15) form a mutual guide, in that the seat of the two valve discs (7, 8) is designed as a cylindrical valve seat (6), and in that the valve discs (7, 8) are movable in opposite directions, in such a way that they expose their seat surfaces corresponding to the closed position, without thereby leaving the valve seat (6).

2. Double-disc valve according to Claim 1, characterised in that each valve disc (7, 8) is axially displaceable against a stop in the cylindrical valve seat (6).

3. Double-disc valve according to Claim 1 or 2, characterised in that the valve housing (1) is made in one piece, so that the cylindrical valve seat (6) is seamless.

4. Double-disc valve according to at least one of Claims 1 to 3, characterised in that the seal of each valve disc (7, 8) consists of a sealing ring (44 and 45) projecting beyond the outer periphery of the valve disc and of two retaining rings (40, 42 and 41, 43) which adjoin the sealing ring (44, 45) on both sides and rest against the topside and underside of the valve disc (7 and 8 respectively), and which extend into the region of the connections between the valve discs (7, 8) and the actuating rod (21) and actuating tube (15) respectively and seal off these connections.

5. Double-disc valve according to Claim 4, characterised in that the sealing ring (44, 45) is produced from rubber or a material similar to rubber in one or more pieces with the retaining rings (40, 42) and (41, 43) and is vulcanised onto the valve disc (7 or 8).

6. Double-disc valve according to Claim 5, characterised in that the sealing ring (44, 45) is designed as an annular bead (46, 47) which projects beyond the side of each valve disc (7 or 8) facing the other valve disc (8 or 7).

7. Double-disc valve according to at least one of Claims 1 to 6, characterised in that the outlet pipe (11) for the cleaning fluid is connected to the leading valve disc (7) and communicates with the leakage monitoring space (9) by means of tapping bores (14, 49).

8. Double-disc valve according to at least one of Claims 1 to 7, characterised in that the actuating tube (15) and the actuating rod (21) are guided through an orifice (16) closable by means of a cover (60) and located in the inflow pipe (3) for the product, and are closed off hermetically relative to the product by means of a bellows (32) fastened to the cover (60) and to the following valve disc (8) so as to be sealed off, and in that, furthermore, the outlet pipe (11) for the cleaning fluid is guided through an orifice (12) closable by means of a cover (64) and located in the flow-off pipe (2) for the product and is closed off hermetically relative to the product by means of a bellows (33) fastened to the cover (64) and to the leading valve disc (7) so as to be sealed off.

9. Double-disc valve according to Claim 8, characterised in that each bellows (32, 33) is designed as a metal bellows and is welded by means of the ends in a leak-proof manner to the associated cover (60 and 64) and to the valve disc (8 and 7).

10. Double-disc valve according to Claim 8 or 9, characterised in that a static seal (61 and 70) is provided between each cover (60, 64) and the housing (1).

11. Double-disc valve according to at least one of Claims 8 to 10, characterised in that the cover (64) for the orifice (12) in the flow-off pipe (2) for the product is pressed from inside against the static seal (70) by means of an outer clamping flange (63).

12. Double-disc valve according to at least one of Claims 8 to 11, characterised in that the cover (60) for the orifice (16) in the inflow pipe (3) interacts with an annular flange (57) welded on the latter and is pressed from outside against the static seal (61) by means of an outer support flange (51), the support flange (51) serving as a support for the entire double-disc valve.

13. Double-disc valve according to at least one of Claims 1 to 12, characterised in that, as a stop for the following valve disc (8) movable in the valve seat, a stop (31) is fastened to the valve housing (4, 19) at a distance (A), corresponding to the movement, from a flange (20a) which is arranged underneath the top end of the actuating tube (15) designed as a seat flange (20) and which, as a result of a spring force acting on the seat flange (20), is pressed against a fixed stop (19) located opposite the stop (31).

14. Double-disc valve according to at least one of Claims 1 to 13, characterised in that, to seal off the valve discs (7, 8) relative to the valve seat (6), there is provided in the housing (1) a sealing ring (75), the width of which corresponds at least to the maximum adjustable distance between the two valve discs (7, 8) within the valve seat (6).

15. Double-disc valve according to Claim 14, characterised in that, to seal off the valve discs (7, 8) from one another in their open position (O) a sealing-off ring (76) is provided in the peripheral region of the side of the leading and/or of the following valve disc (7 or 8) which faces the leakage monitoring space (9).

16. Double-disc valve according to at least one of Claims 1 to 14, characterised in that at least one of the valve discs (7 or 8) is made elastically deformable at least in the sealing-off region.

17. Double-disc valve according to Claim 16, characterised in that each elastic valve disc (7 or 8) has, in the sealing-off region, a small wall thickness which effects elasticity.

18. Double-disc valve according to Claim 16, characterised in that the valve disc (7 or 8) consists of an elastically deformable plastic.

19. Double-disc valve according to Claim 18, characterised in that the seals (38 or 39) of the double-disc valve (7 or 8) are produced from plastic in one piece with the valve disc.

20. Double-disc valve according to at least one of Claims 1 to 19, characterised in that the actuating rod (21) and actuating tube (15) are secured against rotation relative to one another, because the connection piece (26) for supplying the cleaning fluid on the one hand is supported in a slot (27) in the actuating tube (15) and on the other hand is fastened by means of its end to the actuating rod (21).

1/6

Fig.1

Fig. 2

Fig. 3

Fig. 4

Fig.5

21

Fig.6

48  49  10      14  107

129

128  130

Fig.8

117  118

Fig.7

27      226      26

4

227

228

21

15

Fig.9